# FASCICULE DE BREVET EUROPEEN

(11) **EP 2 410 578 B1**
(45) Date de publication et mention de la délivrance du brevet: **17.10.2018**
(21) Numéro de dépôt: 11174898.4
(22) Date de dépôt: 21.07.2011
(51) Int. Cl.: H02S 40/44

(54) **Dispositif solaire hybride thermique et photovoltaique et installation comprenant un tel dispositif**
Kombinierter Solarthermie-Fotovoltaik-Hybridsonnenkollektor, und einen solchen Kollektor umfassende Anlage
Thermal-photovoltaic hybrid solar device and installation including such a device

(30) Priorité: 23.07.2010 FR 1056061
(43) Date de publication de la demande: 25.01.2012
(73) Titulaire: Carrier Corporation, Palm Beach Gardens, FL 33418 (US)
(72) Inventeur: Marvillet, Christophe, 73100 AIX LES BAINS (FR); Llaudet, Franck, 73100 AIX LES BAINS (FR); Portier, Sébastien, 01510 VIRIEUX LE GRAND (FR)
(74) Mandataire: Lavoix

(56) Documents cités:
- WO-A2-2010/049225
- DE-A1- 2 850 844
- DE-A1- 19 914 079
- US-B1- 6 372 978

## Description

La présente invention concerne un dispositif solaire hybride thermique et photovoltaïque ainsi qu'une installation comprenant un tel dispositif.

Dans le domaine du chauffage de l'air au moyen d'énergie solaire, il est connu de récupérer de la chaleur accumulée par des modules solaires hybrides, c'est-à-dire photovoltaïques et thermiques, au niveau de leurs faces arrières non exposées aux rayonnements solaires, en faisant circuler de l'air le long des faces arrières. Ainsi, l'air se réchauffe et peut être utilisé, par exemple, pour le chauffage de bâtiments.

Dans un dispositif solaire hybride thermique et photovoltaïque connu destiné à être installé sur une toiture plane d'un bâtiment, l'air ambiant extérieur est aspiré au travers d'un ensemble de tôles perforées, en amont desquelles se situe un ventilateur pour la circulation de l'air, et sur lesquelles sont disposés des modules solaires photovoltaïques. L'air circulant entre les modules solaires photovoltaïques et les tôles perforées récupère ainsi de la chaleur qui est valorisée pour le chauffage ou le préchauffage de l'air de ventilation d'un bâtiment.

Cependant, les débits d'air mis en oeuvre dans un tel système ne suffisent pas à chauffer suffisamment d'air pour des applications qui requièrent une puissance thermique supérieure à la puissance thermique nécessaire au chauffage ou au préchauffage de l'air de ventilation d'un bâtiment, telles que le chauffage de l'air en amont d'une pompe à chaleur utilisée pour la production de quantités importantes d'eau chaude sanitaire, ce qui n'est pas satisfaisant.

Par ailleurs, l'architecture et le poids d'un tel système ne permet pas une installation au voisinage de la façade d'un bâtiment, ce qui limite les possibilités d'orientation des modules solaires photovoltaïques et ne permet pas une valorisation optimale des rayonnements solaires. De plus, l'utilisation de ce système pour des applications nécessitant une grande puissance thermique requiert une surface de modules solaires photovoltaïques importante pour compenser la valorisation limitée des rayonnements solaires.

WO 2010/049225 divulgue un système prévu pour récupérer la chaleur d'un module photovoltaïque. Des canaux individuels sont définis le long de la face arrière du module. De l'air extérieur entre au niveau de l'extrémité inférieure des canaux individuels, par l'intermédiaire d'un dispositif à ailettes. La sortie de chaque canal individuel débouche dans un canal commun dans lequel est disposé un ventilateur qui fait circuler l'air extérieur entre l'entrée des canaux individuels et un canal auxiliaire relié à un mélangeur d'air multicanaux. En sortie, l'air chauffé par les modules fait fonctionner une pompe à chaleur. Lorsqu'on accole plusieurs de ces dispositifs entre eux, avec un ventilateur commun qui aspire l'air au travers des canaux individuels de chaque dispositif, le débit d'air traversant le dispositif le plus proche du ventilateur est supérieur au débit d'air traversant le dispositif le plus éloigné du ventilateur. Par conséquent, le module photovoltaïque du dispositif le plus éloigné du ventilateur va surchauffer et son rendement va diminuer, par rapport aux autres modules photovoltaïques. Or, pour une installation comportant plusieurs panneaux solaires montés en série, le panneau solaire de plus faible rendement diminue le rendement global de l'installation. Par conséquent, le rendement d'une telle installation n'est pas satisfaisant.

C'est à ces inconvénients qu'entend plus particulièrement remédier l'invention en proposant un dispositif solaire hybride thermique et photovoltaïque et une installation comprenant un tel dispositif, qui permet de chauffer de l'air en amont d'une pompe à chaleur pour une utilisation qui requiert une grande puissance thermique. L'invention peut être utilisée notamment pour produire des quantités d'eau chaude sanitaire suffisantes pour des bâtiments pour lesquels les usages d'eau chaude sanitaire sont importants, par exemple des hôtels ou des maisons de retraite.

A cet effet, l'invention concerne un dispositif solaire hybride thermique et photovoltaïque comprenant au moins un module photovoltaïque équipé d'un panneau solaire connecté électriquement à un récepteur électrique, le module photovoltaïque comprenant une face avant orientée vers le soleil et une face arrière orientée à l'opposé du soleil et le dispositif comprenant
- au moins une chambre d'échange thermique s'étendant le long de la face arrière du module photovoltaïque,
- une chambre intermédiaire dans laquelle débouchent toutes les chambres d'échange thermique,
- une chambre principale apte à être reliée à une chambre principale d'un dispositif adjacent et/ou à des moyens de mise en dépression, et
- des moyens de régulation du débit d'air disposés entre la chambre intermédiaire et la chambre principale.

Grâce à l'invention, lorsque plusieurs dispositifs solaires hybrides sont accolés de manière à ce que leurs chambres principales sont reliées entre elles et forment une seule chambre commune, le débit d'air passant de chaque chambre d'échange thermique à la chambre commune est sensiblement égal pour chaque dispositif solaire hybride, même si une source de dépression est placée à une extrémité de la chambre commune de sorte que chaque dispositif est soumis à une dépression d'intensité différente. De plus, l'intégration aux bâtiments des modules solaires photovoltaïques peut se faire en toiture terrasse, c'est-à-dire sur une toiture plane horizontale, ou en casquette solaire, c'est-à-dire en hauteur sur une façade d'un bâtiment. Par ailleurs, grâce à l'invention, il est possible de réchauffer des débits d'air importants pouvant servir à la production d'eau chaude sanitaire dans des bâtiments ayant des besoins importants en eau chaude sanitaire.

Selon des aspects avantageux mais non obligatoires de l'invention, un tel dispositif peut incorporer une ou plusieurs des caractéristiques suivantes, prises dans toute combinaison techniquement admissible :
- La chambre d'échange thermique a une épaisseur, mesurée selon une direction perpendiculaire à la face avant du module photovoltaïque, comprise entre 10 mm et 20 mm, de préférence de l'ordre de 15 mm.
- La chambre d'échange thermique est délimitée par un insert qui est une plaque, globalement parallèle à la face avant du module photovoltaïque, ayant une section, prise perpendiculairement à la face avant, en forme de créneaux qui délimitent des canaux aptes à relier l'extérieur du dispositif à la chambre intermédiaire. Des segments supérieurs des créneaux sont en contact avec une face arrière du panneau solaire et des segments inférieurs des créneaux, globalement parallèles aux segments supérieurs, sont en contact avec une plaque qui délimite une partie arrière de la chambre d'échange thermique.
- La chambre principale a la géométrie d'un prisme à base polygonale et le module photovoltaïque équipe une face du prisme.
- La chambre principale et la chambre intermédiaire sont composées en partie d'un ensemble de tôles métalliques et sont fabriquées en partie par pliage et par rivetage de ces tôles métalliques.
- La chambre principale est équipée d'au moins un renfort structurel interne.
- Le dispositif comprend des moyens pour la fixation du dispositif en toiture ou en façade d'un bâtiment.
- Les moyens de régulation du débit d'air ne créent pas une aspiration d'air.

L'invention concerne également une installation comprenant une pompe à chaleur de type air/eau, au moins deux dispositifs solaires hybrides thermiques et photovoltaïques conformes à l'invention et des moyens de mise en dépression aptes à faire circuler de l'air depuis une entrée jusqu'à une sortie d'un circuit aéraulique ouvert comportant
- les dispositifs montés en série de sorte que leurs chambres principales respectives sont raccordées l'une à l'autre et forment une seule chambre commune, et
- une sortie d'air ménagée dans un dernier dispositif, le plus proche des moyens de mise en dépression, et reliée avec un évaporateur de la pompe à chaleur.

Selon des caractéristiques avantageuses mais non obligatoires de l'invention, une telle installation peut également inclure les caractéristiques suivantes, prises dans toute combinaison techniquement admissible :
- Les moyens de mise en dépression sont aptes à faire circuler l'air dans le circuit aéraulique à une vitesse inférieure à 6 m/s.
- L'installation comprend une unité de commande pour la modulation du débit d'air du circuit aéraulique selon trois modes de fonctionnement qui dépendent notamment du paramétrage des moyens de mise en dépression :
   - un mode dit grand débit adapté pour la production d'eau chaude sanitaire par la pompe à chaleur,
   - un mode dit petit débit adapté pour refroidir les modules photovoltaïques, et
   - un mode dit débit moyen adapté pour le renouvellement de l'air intérieur d'un bâtiment et le refroidissement des modules photovoltaïques.
- Les moyens de régulation du débit d'air diminuent progressivement le débit d'air aspiré au travers de chaque dispositif, entre le dispositif aval et le dispositif amont, de sorte que le débit d'air aspiré au travers de chaque dispositif est globalement constant.

L'invention sera mieux comprise et d'autres avantages de celle-ci apparaîtront plus clairement à la lumière de la description qui va suivre d'un dispositif solaire hybride et photovoltaïque et d'une installation comprenant un dispositif conforme à son principe, donnée uniquement à titre d'exemple et faite en référence aux dessins annexés dans lesquels :
- la figure 1 est une vue en perspective d'un dispositif solaire hybride thermique et photovoltaïque conforme à l'invention ;
- la figure 2 est une coupe selon le plan II à la figure 1 ;
- la figure 3 est une vue en perspective d'un module photovoltaïque appartenant au dispositif de la figure 1 ;

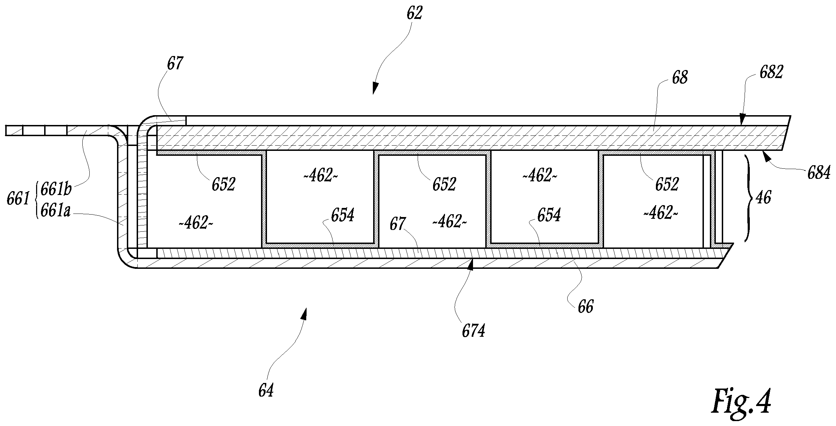

- la figure 4 est une coupe selon la ligne IV-IV à la figure 3 ; et
- la figure 5 est un schéma d'une installation comprenant plusieurs dispositifs conformes à l'invention.

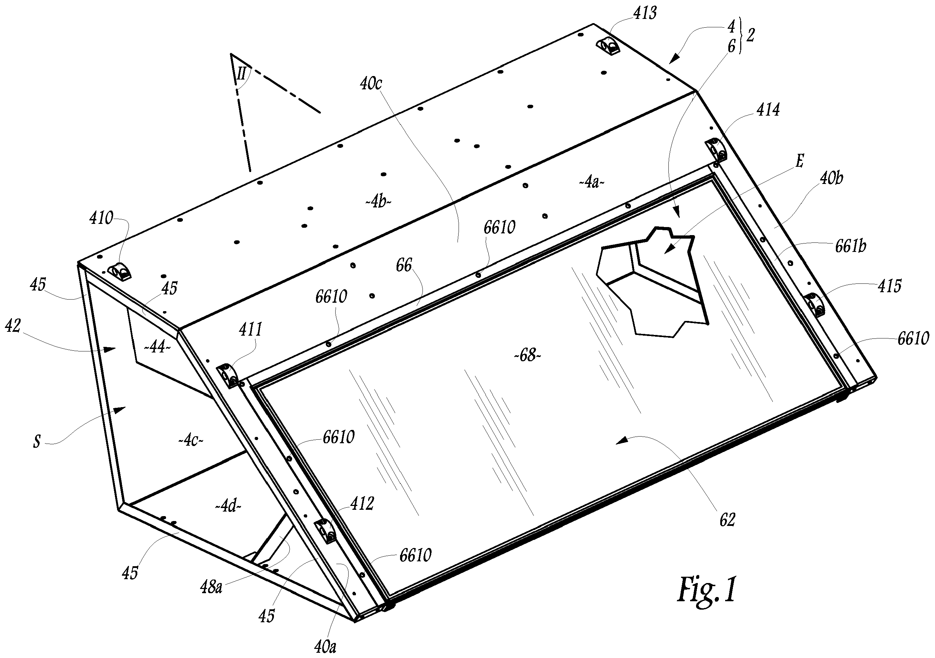

La figure 1 représente un dispositif 2 solaire hybride, c'est-à-dire thermique et photovoltaïque, qui comprend une gaine 4 et un module 6 solaire photovoltaïque rectangulaire.

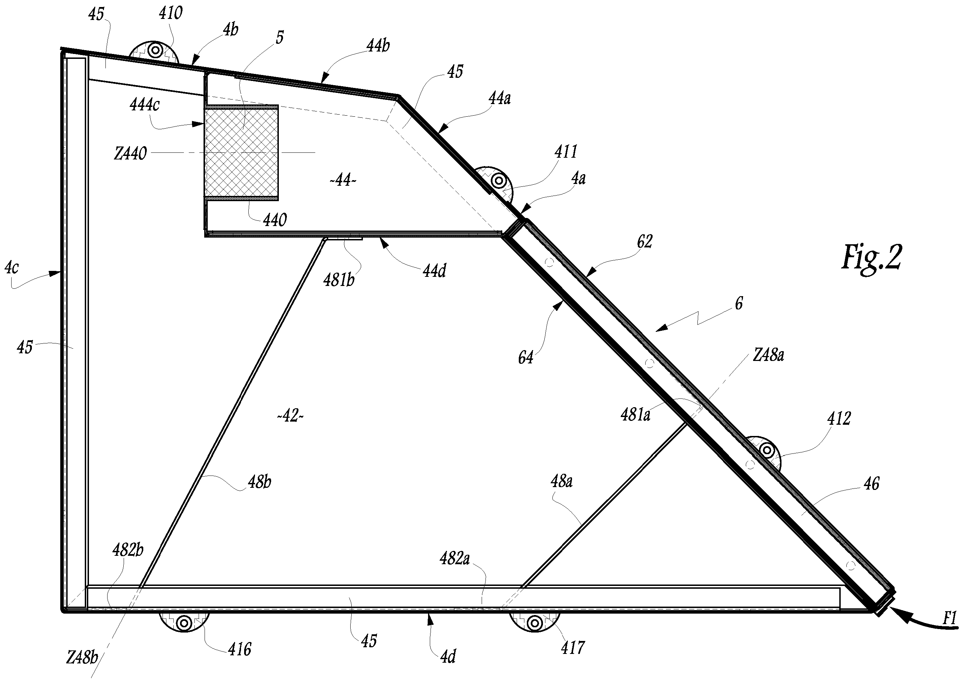

La gaine 4 est un prisme droit dont les bases sont ouvertes et sont des quadrilatères. Une base du prisme correspond à une entrée E de la gaine 4 et l'autre base correspond à une sortie S de la gaine 4. Une surface latérale de la gaine 4 comporte deux faces latérales 4c et 4d qui sont perpendiculaires, une troisième face latérale 4b qui forme un angle légèrement inférieur à 90° avec la face de plus petites dimensions 4c parmi les deux faces perpendiculaires 4c et 4d et une quatrième face 4a qui constitue une face avant de la gaine 4 et qui comporte une ouverture rectangulaire débouchant au niveau d'une arête de la gaine 4 formée par les faces 4a et 4d. Lorsque le dispositif 2 est en configuration installée, la face 4d est horizontale et la face 4b est légèrement inclinée, ce qui permet de favoriser l'évacuation de l'eau de pluie, des feuilles mortes, ou de tout autre corps indésirable. Comme le montrent les figures 1 et 2, l'ouverture rectangulaire de la face avant 4a est équipée du module photovoltaïque 6. La face avant 4a comporte trois portions en forme de bandes rectangulaires qui entourent l'ouverture rectangulaire : une portion 40a située entre la sortie S et l'ouverture rectangulaire, une portion 40b située entre l'entrée E et l'ouverture rectangulaire et une portion 40c située entre la face 4b et l'ouverture rectangulaire.

Comme le montre plus particulièrement la figure 2, une chambre intermédiaire 44 est située à l'intérieur de la gaine 4 au niveau de l'arête constituée par les faces 4a et 4b de la gaine 4. La chambre intermédiaire 44 a la géométrie d'un prisme droit dont les faces 44a, 44b, 44c et 44d sont respectivement parallèles aux faces 4a à 4d de la gaine 4 et dont les faces 44a et 44b sont respectivement confondues avec les faces 4a et 4b de la gaine 4.

Le volume situé à l'intérieur de la gaine 4 et à l'extérieur de la chambre intermédiaire 44 définit une chambre principale 42.

Deux paires de lames métalliques 48a et 48b améliorent la résistance mécanique de la gaine 4 et constituent un renfort structurel interne pour la gaine 4. Une première paire de lames 48a, dont l'une est située à proximité de l'entrée E de la gaine 4 et l'autre est située à proximité de la sortie S de la gaine 4, relie les faces 4a et 4d. Les axes longitudinaux des lames de la première paire de lames 48a sont confondus à la figure 2 en un axe Z48a parallèle aux bases de la gaine 4 et globalement perpendiculaire à la face avant 4a. Les lames 48a ont leurs extrémités 481a et 482a recourbées pour leur fixation aux faces 4a et 4d. Des premières extrémités 481a des lames 48a s'étendent respectivement contre les portions 40a et 40b de la face avant 4a. Des deuxièmes extrémités 482a des lames 48a s'étendent contre la face 4d de la gaine 4.

Une deuxième paire de lames 48b s'étend entre la face 4d de la gaine 4 et la face 44d de la chambre intermédiaire 44. Les lames 48b ont leurs extrémités 481b et 482b recourbées pour permettre leur fixation respectivement à la face 44d et à la face 4d, de manière analogue aux lames 48a. Les axes longitudinaux des lames de la de la deuxième paire de lames 48b sont confondus à la figure 2 en un axe Z48b parallèle aux bases de la gaine 4 et globalement confondu avec la bissectrice des faces 4a et 4b de la gaine 4.

Les faces 4a à 4d comportent chacune, au niveau de leurs arêtes situées du côté de l'entrée E et de la sortie S, une portion pliée à angle droit vers l'intérieur de la gaine 4. Les portions pliées des faces 4a à 4d du côté de l'entrée E et du côté de la sortie S définissent un contour 45 fermé.

La face 44c de la chambre intermédiaire 44 comporte trois ouvertures circulaires 444c, dont l'une est visible à la figure 2, sur lesquelles sont raccordés des supports 440 qui ont la géométrie d'un cylindre à base circulaire d'axe Z440 parallèle à la face 44d. Les supports 440 renferment chacun un régulateur de débit 5. Les régulateurs de débit 5 peuvent être de type à clapet ou à membrane. Les régulateurs de débit 5 sont disposés entre la chambre intermédiaire 44 et la chambre principale 42. Les régulateurs de débit 5 ne créent pas une aspiration d'air mais font varier le débit du flux d'air qui les traverse, ce flux étant mis en mouvement par des moyens de mise en dépression auxiliaires.

La gaine 4 et la chambre intermédiaire 44 sont constituées de tôles métalliques pliées et assemblées entre elles par des rivets non représentés.

La gaine 4 comporte des moyens d'assemblage sous la forme de dix éléments de fixation semi-circulaires présentant chacun un trou cylindrique d'axe longitudinal parallèle aux faces 4a à 4d.

Deux éléments de fixation 410 et 413 sont assemblés sur la face 4b respectivement à proximité de la sortie S et de l'entrée E. Deux éléments de fixation 411 et 414 sont assemblés sur la portion 40c de la face 4a, respectivement à proximité de la sortie S et de l'entrée E. Deux éléments de fixation 412 et 415 sont assemblés respectivement sur les portions 40a et 40b de la face 4a. Deux éléments de fixation 416 et 417 visibles à la figure 2, sont assemblés sur la face 4d à proximité de la sortie S et deux éléments de fixation non représentés sont assemblés sur la face 4d à proximité de l'entrée E.

Les éléments de fixation 416 et 417 nuisent à la stabilité du dispositif 2 lorsqu'il est installé sur une surface plane horizontale mais sont utiles lorsque le dispositif 2 est installé en casquette solaire, c'est-à-dire en débordement par rapport à une paroi verticale, auquel cas les éléments de fixation 416 et 417 ne sont pas en contact avec une paroi. Lorsque le dispositif 2 doit être installé sur une surface plane horizontale, les éléments de fixation 416 et 417 sont déplacés au niveau de la face 4c de la gaine.

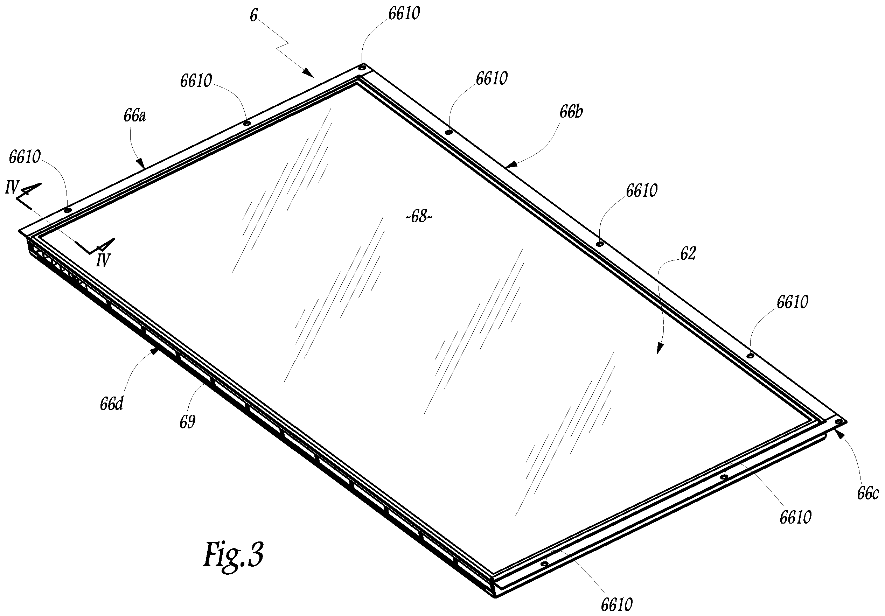

La figure 3 représente le module photovoltaïque 6. Le module 6 comprend une face avant 62. Lorsque le module 6 est assemblé avec la gaine 4, la face avant 62 est tournée vers l'extérieur de la gaine 4, comme le montrent les figures 1 et 2. La face avant 62 est équipée d'un panneau solaire 68 qui est un générateur de courant électrique constitué d'un ensemble de cellules photovoltaïques reliées entre elles électriquement.

Un insert 65 s'étend sur une face arrière 684 du panneau solaire 68. L'insert 65 a la géométrie d'une plaque parallèle au panneau solaire 68. La section de l'insert 65, prise selon un plan perpendiculaire au panneau solaire 68, présente des créneaux. Des portions supérieures 652 des créneaux, situées du côté de la face avant 62 du module 6, sont assemblées avec la face arrière 684 du panneau solaire 68. Des portions inférieures 654 des créneaux, opposés à la face avant 62 du module 6, sont assemblées avec un support 67 qui est une plaque parallèle au panneau solaire 68. Le support 67 a ses bords recourbés de manière à enserrer les bords d'une face avant 682 du panneau solaire 68.

Les créneaux de l'insert 65 définissent des canaux 462 qui constituent ensemble une chambre d'échange thermique 46.

Les portions supérieures 652 et inférieures 654 des créneaux sont assemblées respectivement avec la face arrière 684 du panneau 68 et avec le support 67, par exemple au moyen de colle à base de silicone, ce qui favorise les échanges thermiques.

Un bâti 66 est adapté pour recevoir le panneau solaire 68, l'insert 65 et le support 67. Le bâti 66 a la géométrie d'une plaque rectangulaire dont trois bords 66a, 66b et 66c comportent un rebord 661. Le rebord 661 comprend une première portion 661a perpendiculaire au panneau solaire 68 et une deuxième portion 661b reliée à la première portion 661a et parallèle au panneau solaire 68. La portion 661b du rebord 661 permet de retenir le panneau solaire 68, l'insert 65 et le support 67 dans l'ouverture rectangulaire de la face avant 4a. La portion 661b du rebord 661 est fixée à la face 4a par des moyens non représentés aptes à coopérer avec des trous 6610 ménagés sur la portion 661b.

Lorsque le module photovoltaïque 6 est assemblé avec la gaine 4, le bord 66b du bâti 66 est situé au niveau de la jointure entre les faces 44a et 44b de la chambre intermédiaire 44, de sorte que les canaux 462 définis par l'insert 65 ont leurs extrémités situées du côté du bord 66b qui débouchent dans la chambre intermédiaire 44 et ont leurs extrémités situées du côté du bord 66d qui débouchent à l'extérieur de la gaine 4.

L'extrémité des canaux 462 située du côté du bord 66d est équipée d'une grille 69 représentée à la figure 3 qui empêche les impuretés et les animaux de pénétrer dans les canaux 462.

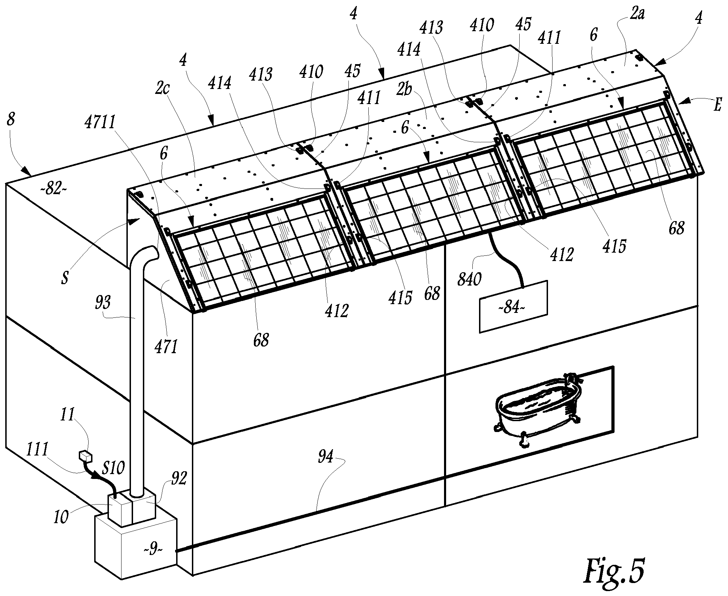

La figure 5 représente une installation comprenant un bâtiment 8, une pompe à chaleur 9 de type air/eau, trois dispositifs 2a, 2b et 2c solaires hybrides thermiques et photovoltaïques et des moyens de mise en dépression 10 pilotés par une unité de commande 11.

Les dispositifs 2a, 2b et 2c sont situés en bordure d'une toiture 82 plane du bâtiment 8 et comportent des moyens non représentés pour leur fixation au bâtiment 8. Ces moyens de fixation peuvent être composés d'équerres fixées sur la façade.

On définit l'amont et l'aval relativement au sens de l'écoulement d'air dans l'installation, entre les chambres d'échange thermique 46 et les moyens de mise en dépression 10. L'aspiration d'air créée par les moyens de mise en dépression 10 est plus importante à l'aval qu'à l'amont.

La sortie S du dispositif 2a est accolée avec l'entrée E du dispositif 2b et la sortie S du dispositif 2b est accolée avec l'entrée E du dispositif 2c. Ainsi, le contour 45 du dispositif 2a situé au niveau de sa sortie S est en contact avec le contour 45 du dispositif 2b situé du côté de son entrée E, et le contour 45 du dispositif 2b situé au niveau de sa sortie S est en contact avec le contour 45 du dispositif 2c situé au niveau de son entrée E.

Les chambres principales 42 de chaque dispositif 2a, 2b et 2c forment une seule chambre commune qui est la réunion des volumes des chambres principales 42 de chaque dispositif 2a, 2b et 2c. Les panneaux solaires 68 de chaque dispositif 2a, 2b et 2c sont branchés en série et sont reliés électriquement à des moyens de stockage 84, pouvant être en pratique une batterie, par un câble électrique 840.

Les dispositifs 2a, 2b et 2c sont maintenus ensemble par des éléments non représentés qui coopèrent avec les éléments de fixation 410 à 417. Ces éléments peuvent être par exemple des boulons disposés dans les trous cylindriques des éléments de fixation 410 à 417. Les éléments de fixation 410 à 417, pour chaque paire de bases adjacentes appartenant à deux dispositifs adjacents, sont en regard deux à deux et ont leurs trous cylindriques alignés.

L'entrée E du dispositif 2a est obstruée par une plaque non représentée et la sortie S du dispositif 2c est obstruée par une plaque 471 qui comporte un orifice circulaire 4711 relié à un évaporateur 92 de la pompe à chaleur 9 par un conduit 93.

L'évaporateur comporte une zone d'échange thermique qui reçoit en entrée le conduit 93 et dont la sortie est équipée de moyens de mise en dépression 10, tels qu'un ventilateur ou une pompe.

La gaine 93 comprend des ramifications reliées à des bouches d'aération du bâtiment 8 non représentées, par l'intermédiaire de conduits secondaires. Les ramifications comportent des clapets aptes à obstruer sélectivement chaque conduit secondaire.

En fonctionnement, les cellules photovoltaïques des panneaux solaires 68 des dispositifs 2a, 2b et 2c, exposées aux rayonnements solaires, produisent du courant électrique qui alimente en énergie électrique les moyens de stockage 84.

Par ailleurs, le soleil réchauffe les modules 6 de chaque dispositif 2a, 2b et 2c et des échanges thermiques ont lieu entre les panneaux solaires 68, les inserts 65, les bâtis 66 et les supports 67. L'air qui circule dans les canaux 462, depuis leurs extrémités reliées à l'extérieur des dispositifs 2a, 2b et 2c jusqu'à leurs extrémités débouchant dans la chambre commune, constitue une lame d'air. La lame d'air a une épaisseur, mesurée perpendiculairement à la face avant 62 du module 6, comprise entre 10 mm et 20 mm, de préférence de l'ordre de 15 mm. Cette épaisseur favorise les échanges thermiques.

Les moyens de mise en dépression 10 permettent de faire circuler l'air extérieur ambiant successivement à travers les dispositifs 2a, 2b et 2c, la gaine 93 et l'évaporateur 92, à une vitesse n'excédant pas 3 m/s, ce qui limite le bruit généré par les flux d'air. Pour chaque dispositif 2a, 2b et 2c, les moyens de mise en dépression 10 font circuler l'air successivement à travers la chambre d'échange thermique 46, la chambre intermédiaire 44, les régulateurs de débit 5 et la chambre principale 42.

Après avoir atteint l'évaporateur 92, l'air est expulsé vers l'extérieur. La circulation de l'air, à partir de l'entrée E du dispositif 2a jusqu'à l'évaporateur 92, provoque une aspiration de l'air extérieur dans les créneaux 462 des inserts 65 de chaque dispositif 2a, 2b et 2c. Cette aspiration est représentée par la flèche F1 à la figure 2.

L'air qui circule dans chaque chambre d'échange thermique 46 absorbe de la chaleur à chaque module 6 et se réchauffe, refroidissant ainsi chaque module 6. Les régulateurs de débit 5 assurent, pour l'air circulant entre chaque chambre intermédiaire 44 et la chambre commune formée par les chambres principales 42, un débit sensiblement constant. De cette manière, le refroidissement de chaque module 6 est globalement homogène et la température de l'air en sortie de chaque chambre intermédiaire 44 est globalement homogène.

En effet, si les dispositifs 2a, 2b et 2c n'étaient pas équipés de régulateurs de débit 5, le débit de l'air aspiré dans la chambre d'échange thermique 46 du dispositif 2c serait important car le dispositif 2c est situé à proximité des moyens de mise en dépression 10, le débit de l'air aspiré dans la chambre d'échangé thermique 46 du dispositif 2b serait modéré car le dispositif 2b est situé en aval du dispositif 2a et le débit de l'air aspiré dans le dispositif 2a serait faible car le dispositif 2a est situé en aval des dispositifs 2b et 2c. En d'autres termes, les régulateurs de débit 5 permettent de remédier à la diminution de l'efficacité de l'aspiration du dispositif amont 2a au dispositif aval 2c, générée par les moyens de mise en dépression 10.

Les régulateurs de débit 5 de chaque dispositif 2a, 2b et 32c diminuent progressivement le débit d'air aspiré au travers de chaque dispositif 2a, 2b et 2c, entre le dispositif aval 2c et le dispositif amont 2a. Ainsi, le débit d'air aspiré au travers de chaque dispositif 2a, 2b, 2c est globalement constant. En d'autres termes, les régulateurs de débit 5 diminuent de manière plus prononcée le débit d'air aspiré au travers du dispositif aval 2c que le débit d'air aspiré au travers du dispositif amont 2a.

De manière connue, le rendement des panneaux solaires chute lorsque leur température s'élève. Pour une installation comportant plusieurs panneaux solaires montés en série, le panneau solaire de plus faible rendement diminue le rendement de toute l'installation. Les régulateurs de débit 5 permettent de remédier à ces inconvénients.

Les régulateurs de débit 5 régulent le passage de l'air chauffé dans les canaux 462 des inserts 65 de chaque dispositif 2a, 2b et 2c, jusqu'à la chambre principale 42 commune des dispositifs 2. Puis, l'air parcourt le conduit 93 et traverse la zone d'échanges thermique de l'évaporateur 92 avant d'être rejeté dans l'atmosphère extérieure. L'air chaud qui arrive dans l'évaporateur 92 de la pompe à chaleur 9 permet de produire de l'eau chaude sanitaire, délivrée au moyen d'un tuyau 94.

La quantité d'eau chaude sanitaire produite est suffisante pour couvrir les besoins de bâtiments pour lesquels les usages d'eau chaude solaire sont importants, par exemple, des hôtels ou les maisons de retraite.

L'unité de commande 11 pilote la vitesse des moyens de mise en dépression 10 au moyen d'un signal S10 acheminé de l'unité de commande 11 jusqu'aux moyens de mise en dépression 10 par un câble électrique 111. L'unité de commande 11 permet de piloter les moyens de mise en dépression 10 selon trois vitesses correspondant à trois modes de fonctionnement de l'installation :
- Un premier mode de fonctionnement dit grand débit, correspondant à une dépression élevée, optimise la production d'eau chaude sanitaire, lorsque la production d'eau chaude sanitaire est en cours. Eventuellement, l'unité de commande 11 peut piloter les clapets pour permettre un chauffage de l'air ambiant du bâtiment 8.
- Un mode de fonctionnement dit petit débit, correspondant à une vitesse faible de ventilation, assure le seul refroidissement des modules 6. Dans ce cas, l'unité de commande 11 pilote les clapets pour bloquer le passage de l'air dans les conduits secondaires.
- Un mode de fonctionnement dit débit moyen, correspondant à une vitesse de ventilation moyenne, assure un réchauffage de l'air de renouvellement du bâtiment 8 par les bouches d'aération et le refroidissement des modules 6. Dans ce cas, l'unité de commande 11 pilote les clapets pour autoriser le passage de l'air dans les conduits secondaires.

L'installation représentée à la figure 5 comporte trois dispositifs 2. Cependant, en pratique, l'installation peut comporter un nombre de dispositifs supérieur ou égal à un.

Dans un autre mode de réalisation de l'invention, non représenté, la gaine 4 et/ou la chambre intermédiaire 44 peuvent avoir la géométrie d'un prisme à base polygonale, par exemple à base triangulaire.

Dans un autre mode de réalisation de l'invention, non représenté, la chambre intermédiaire 44 peut comporter un même nombre de supports 440 et de régulateurs de débit 5 différent de trois.

## Revendications

1. Dispositif (2) solaire hybride thermique et photovoltaïque comprenant au moins un module photovoltaïque (6) équipé d'un panneau solaire (68) connecté électriquement à un récepteur électrique (84), le module photovoltaïque comprenant une face avant (62) orientée vers le soleil et une face arrière (64) orientée à l'opposé du soleil, **caractérisé en ce qu'**il comprend
- au moins une chambre d'échange thermique (46) s'étendant le long de la face arrière (64) du module photovoltaïque (6),
- une chambre intermédiaire (44) dans laquelle débouchent toutes les chambres d'échange thermique (46),
- une chambre principale (42) apte à être reliée à une chambre principale (42) d'un dispositif (2) adjacent et/ou à des moyens de mise en dépression (10), et
- des moyens (5) de régulation du débit d'air disposés entre la chambre intermédiaire (44) et la chambre principale (42).

2. Dispositif (2) solaire hybride thermique et photovoltaïque selon la revendication 1, **caractérisé en ce que** la chambre d'échange thermique (46) a une épaisseur, mesurée selon une direction perpendiculaire à la face avant (62) du module photovoltaïque (6), comprise entre 10 mm et 20 mm, de préférence de l'ordre de 15 mm.

3. Dispositif (2) solaire hybride thermique et photovoltaïque selon l'une des revendications précédentes, **caractérisé**
**en ce que** la chambre d'échange thermique (46) est délimitée par un insert (65) qui est une plaque, globalement parallèle à la face avant (62) du module photovoltaïque (6), ayant une section, prise perpendiculairement à la face avant (62), en forme de créneaux qui délimitent des canaux (462) aptes à relier l'extérieur du dispositif (2) à la chambre intermédiaire (44),
**en ce que** des segments supérieurs (652) des créneaux sont en contact avec une face arrière (684) du panneau solaire (68)
et **en ce que** des segments inférieurs (654) des créneaux, globalement parallèles aux segments supérieurs (652), sont en contact avec une plaque (67) qui délimite une partie arrière de la chambre d'échange thermique (46).

4. Dispositif (2) solaire hybride thermique et photovoltaïque selon l'une des revendications précédentes, **caractérisé**
**en ce que** la chambre principale (42) a la géométrie d'un prisme à base polygonale
et **en ce que** le module photovoltaïque (6) équipe une face (4a) du prisme.

5. Dispositif (2) solaire hybride thermique et photovoltaïque selon l'une des revendications précédentes, **caractérisé en ce que** la chambre principale (42) et la chambre intermédiaire (44) sont composées en partie d'un ensemble de tôles métalliques et sont fabriquées en partie par pliage et par rivetage de ces tôles métalliques.

6. Dispositif (2) solaire hybride thermique et photovoltaïque selon l'une des revendications précédentes, **caractérisé en ce que** la chambre principale (42) est équipée d'au moins un renfort structurel interne (48a, 48b).

7. Dispositif (2) solaire hybride thermique et photovoltaïque selon l'une des revendications précédentes, **caractérisé en ce qu'**il comprend des moyens pour la fixation du dispositif (2) en toiture (52) ou en façade d'un bâtiment (8).

8. Dispositif (2) solaire hybride thermique et photovoltaïque selon l'une des revendications précédentes, **caractérisé en ce que** les moyens (5) de régulation du débit d'air ne créent pas une aspiration d'air.

9. Installation comprenant une pompe à chaleur (9) de type air/eau et au moins deux dispositifs (2a, 2b, 2c) solaires hybrides thermiques et photovoltaïques selon l'une des revendications précédentes, **caractérisée en ce que** des moyens de mise en dépression (10) sont aptes à faire circuler de l'air de l'amont vers l'aval, depuis une entrée jusqu'à une sortie d'un circuit aéraulique ouvert comportant
- les dispositifs (2a, 2b, 2c) montés en série de l'amont vers l'aval, de sorte que leurs chambres principales (42) respectives sont raccordées l'une à l'autre et forment une seule chambre commune, et
- une sortie d'air ménagée dans un dispositif aval (2c), le plus proche des moyens de mise en dépression, et reliée avec un évaporateur (92) de la pompe à chaleur (9).

10. Installation selon la revendication 9, **caractérisée en ce que** les moyens de mise en dépression (10) sont aptes à faire circuler l'air dans le circuit aéraulique à une vitesse inférieure à 6m/s.

11. Installation selon l'une des revendications 9 ou 10, **caractérisée en ce qu'**elle comprend une unité de commande (11) pour la modulation du débit d'air du circuit aéraulique selon trois modes de fonctionnement qui dépendent notamment du paramétrage des moyens de mise en dépression (10) :
- un mode dit grand débit adapté pour la production d'eau chaude sanitaire par la pompe à chaleur (9),
- un mode dit petit débit adapté pour refroidir les modules photovoltaïques (6), et
- un mode dit débit moyen adapté pour le renouvellement de l'air intérieur d'un bâtiment (8) et le refroidissement des modules photovoltaïques (6).

12. Installation selon l'une des revendications 9 à 11, **caractérisée en ce que** les moyens (5) de régulation du débit d'air diminuent progressivement le débit d'air aspiré au travers de chaque dispositif (2a, 2b, 2c), entre le dispositif aval (2c) et le dispositif amont (2a), de sorte que le débit d'air aspiré au travers de chaque dispositif (2a, 2b, 2c) est globalement constant.

## Patentansprüche

1. Thermische und photovoltaische Hybrid-Solarvorrichtung (2), die wenigstens ein photovoltaisches Modul (6) umfasst, das mit einem Solarpanel (68) ausgerüstet ist, das mit einem Stromempfänger (84) elektrisch verbunden ist, wobei das photovoltaische Modul eine vordere Fläche (62), die zur Sonne orientiert ist, und eine hintere Fläche (64), die entgegengesetzt zur Sonne orientiert ist, aufweist, **dadurch gekennzeichnet, dass** sie Folgendes umfasst:
- wenigstens eine Wärmeaustauschkammer (46), die sich längs der hinteren Fläche (64) des photovoltaischen Moduls (6) erstreckt,
- eine Zwischenkammer (44), in die sämtliche Wärmeaustauschkammern (46) münden,
- eine Hauptkammer (42), die mit einer Hauptkammer einer benachbarten Vorrichtung (2) und/oder mit Unterdruckherstellungsmitteln (10) verbunden werden kann, und
- Mittel (5) zum Regulieren des Luftdurchflusses, die zwischen der Zwischenkammer (44) und der Hauptkammer (42) angeordnet sind.

2. Thermische und photovoltaische Hybrid-Solarvorrichtung (2) nach Anspruch 1, **dadurch gekennzeichnet, dass** die Wärmeaustauschkammer (46) eine Dicke gemessen in einer Richtung senkrecht zu der vorderen Fläche (62) des photovoltaischen Moduls (6) besitzt, die im Bereich von 10 mm bis 20 mm und vorzugsweise in der Größenordnung von 15 mm liegt.

3. Thermische und photovoltaische Hybrid-Solarvorrichtung (2) nach einem der vorhergehenden Ansprüche, **dadurch gekennzeichnet,**
**dass** die Wärmeaustauschkammer (46) durch einen Einsatz (65) begrenzt ist, der eine zu der vorderen Fläche (62) des photovoltaischen Moduls (6) im Wesentlichen parallele Platte ist und einen Querschnitt senkrecht zu der vorderen Fläche (62) in Form von Rechtecken besitzt, die Kanäle (462) begrenzen, die die äußere Umgebung der Vorrichtung (2) mit der Zwischenkammer (44) verbinden können,
**dass** obere Segmente (652) der Rechtecke mit einer hinteren Fläche (684) des Solarpanels (68) in Kontakt sind
und **dass** untere Segmente (654) der Rechtecke, die im Wesentlichen parallel zu den oberen Segmenten (652) sind, mit einer Platte (67) in Kontakt sind, die einen hinteren Teil der Wärmeaustauschkammer (46) begrenzt.

4. Thermische und photovoltaische Hybrid-Solarvorrichtung (2) nach einem der vorhergehenden Ansprüche, **dadurch gekennzeichnet,**
**dass** die Hauptkammer (42) die Geometrie eines Prismas auf Polygonbasis besitzt
und **dass** das photovoltaische Modul eine Prismenfläche (4a) ausstattet.

5. Thermische und photovoltaische Hybrid-Solarvorrichtung (2) nach einem der vorhergehenden Ansprüche, **dadurch gekennzeichnet, dass** die Hauptkammer (42) und die Zwischenkammer (44) teilweise aus einer Metallblechanordnung zusammengesetzt sind und teilweise durch Biegen und durch Nieten dieser Metallbleche hergestellt sind.

6. Thermische und photovoltaische Hybrid-Solarvorrichtung nach einem der vorhergehenden Ansprüche, **dadurch gekennzeichnet, dass** die Hauptkammer (42) mit wenigstens einer inneren strukturellen Verstärkung (48a, 48b) ausgestattet ist.

7. Thermische und photovoltaische Hybrid-Solarvorrichtung (2) nach einem der vorhergehenden Ansprüche, **dadurch gekennzeichnet, dass** sie Mittel für die Befestigung der Vorrichtung (2) auf dem Dach (52) oder an der Fassade eines Gebäudes (8) umfasst.

8. Thermische und photovoltaische Hybrid-Solarvorrichtung (2) nach einem der vorhergehenden Ansprüche, **dadurch gekennzeichnet, dass** die Mittel (5) für die Regulierung des Luftdurchflusses keine Luftansaugung hervorrufen.

9. Anlage, die eine Wärmepumpe (9) des Luft/Wasser-Typs und wenigstens zwei thermische und photovoltaische Hybrid-Solarvorrichtungen (2a, 2b, 2c) nach einem der vorhergehenden Ansprüche umfasst, **dadurch gekennzeichnet, dass** die Unterdruckherstellungsmittel (10) Luft von der stromaufwärtigen zu der stromabwärtigen Seite von einem Eingang bis zu einem Ausgang eines offenen Aeraulikkreises strömen lassen können, der Folgendes umfasst:
- die Vorrichtungen (2a, 2b, 2c), die von der stromaufwärtigen Seite zu der stromabwärtigen Seite in Reihe montiert sind, derart, dass ihre jeweiligen Hauptkammern (42) miteinander verbunden sind und eine einzige gemeinsame Kammer bilden, und
- einen Luftaustritt, der in einer stromabwärtigen Vorrichtung (2c) am nächsten bei den Unterdruckherstellungsmitteln ausgebildet ist und mit einem Verdampfer (92) der Wärmepumpe (9) verbunden ist.

10. Anlage nach Anspruch 9, **dadurch gekennzeichnet, dass** die Unterdruckherstellungsmittel (10) Luft in dem Aeraulikkreis mit einer Geschwindigkeit von weniger als 6 m/s strömen lassen können.

11. Anlage nach einem der Ansprüche 9 oder 10, **dadurch gekennzeichnet, dass** sie eine Steuereinheit (11) für die Modulation des Luftdurchflusses des Aeraulikkreises gemäß drei Betriebsarten, die insbesondere von der Parametrierung der Unterdruckherstellungsmittel (10) abhängt, umfasst:
- eine Betriebsart mit hohem Durchfluss, die für die Erzeugung von heißem Sanitärwasser durch die Wärmepumpe (9) ausgelegt ist,
- eine Betriebsart mit niedrigem Durchfluss, die für die Kühlung der photovoltaischen Module (6) ausgelegt ist, und
- eine Betriebsart mit mittlerem Durchfluss, die für die Erneuerung der Innenluft eines Gebäudes (8) und für die Kühlung der photovoltaischen Module (6) ausgelegt ist.

12. Anlage nach einem der Ansprüche 9 bis 11, **dadurch gekennzeichnet, dass** die Mittel (5) für die Regulierung des Luftdurchflusses den Durchfluss von Luft, die durch jede Vorrichtung (2a, 2b, 2c) angesaugt wird, zwischen der stromabseitigen Vorrichtung (2c) und der stromaufseitigen Vorrichtung (2a) allmählich verringern, derart, dass der Durchfluss von Luft, die durch jede Vorrichtung (2a, 2b, 2c) angesaugt wird, im Wesentlichen konstant ist.

## Claims

1. Hybrid photovoltaic thermal solar device (2) comprising at least one photovoltaic module (6) equipped with a solar panel (68) electrically connected to an electrical receiver (84), the photovoltaic module comprising a front face (62) oriented towards the sun and a rear face (64) oriented away from the sun, **characterised in that** it comprises
- at least one thermal exchange chamber (46) extending along the rear face (64) of the photovoltaic module (6),
- an intermediate chamber (44) into which all the thermal exchange chambers (46) open,
- a main chamber (42) capable of being connected to a main chamber (42) of an adjacent device (2) and/or to depressurisation means (10), and
- means (5) for regulating the air flow arranged between the intermediate chamber (44) and the main chamber (42).

2. Hybrid photovoltaic thermal solar device (2) according to claim 1, **characterised in that** the thermal exchange chamber (46) has a thickness, measured in a direction perpendicular to the front face (62) of the photovoltaic module (6), of between 10 mm and 20 mm, preferably of approximately 15 mm.

3. Hybrid photovoltaic thermal solar device (2) according to any one of the preceding claims, **characterised**
**in that** the thermal exchange chamber (46) is delimited by an insert (65) which is a plate, generally parallel to the front face (62) of the photovoltaic module (6), having a cross-section, taken perpendicularly to the front face (62), in the form of crenellations which delimit channels (462) capable of connecting the exterior of the device (2) to the intermediate chamber (44),
- **in that** upper segments (652) of the crenellations are in contact with a rear face (684) of the solar panel (68),
and **in that** lower segments (654) of the crenellations, which are generally parallel to the upper segments (652), are in contact with a plate (67) which delimits a rear portion of the thermal exchange chamber (46).

4. Hybrid photovoltaic thermal solar device (2) according to any one of the preceding claims, **characterised**
**in that** the main chamber (42) has the geometry of a polygon-base prism,
and **in that** the photovoltaic module (6) is provided on a face (4a) of the prism.

5. Hybrid photovoltaic thermal solar device (2) according to any one of the preceding claims, **characterised in that** the main chamber (42) and the intermediate chamber (44) are composed in part of a set of metal sheets and are fabricated in part by bending and by riveting of the metal sheets.

6. Hybrid photovoltaic thermal solar device (2) according to any one of the preceding claims, **characterised in that** the main chamber (42) is equipped with at least one internal structural reinforcement (48a, 48b).

7. Hybrid photovoltaic thermal solar device (2) according to any one of the preceding claims, **characterised in that** it comprises means for fixing the device (2) to the roof (52) or to the façade of a building (8).

8. Hybrid photovoltaic thermal solar device (2) according to any one of the preceding claims, **characterised in that** the means (5) for regulating the air flow do not create an intake of air.

9. Arrangement comprising a heat pump (9) of the air/water type and at least two hybrid photovoltaic thermal solar devices (2a, 2b, 2c) according to any one of the preceding claims, **characterised in that** depressurisation means (10) are capable of circulating air from upstream to downstream, from an inlet to an outlet of an open aeraulic circuit comprising
- the devices (2a, 2b, 2c) mounted in series from upstream to downstream, so that their respective main chambers (42) are connected to one another and form a single common chamber, and
- an air outlet formed in a downstream device (2c), closest to the depressurisation means, and connected to an evaporator (92) of the heat pump (9).

10. Arrangement according to claim 9, **characterised in that** the depressurisation means (10) are capable of circulating the air in the aeraulic circuit at a speed of less than 6 m/s.

11. Arrangement according to either claim 9 or claim 10, **characterised in that** it comprises a control unit (11) for modulating the air flow of the aeraulic circuit according to three operating modes which depend especially on the configuration of the depressurisation means (10):
- a mode called the high-flow mode, adapted to produce hot water for sanitary purposes by means of the heat pump (9),
- a mode called the low-flow mode, adapted to cool the photovoltaic modules (6), and
- a mode called the medium-flow mode, adapted to renew the air inside a building (8) and to cool the photovoltaic modules (6).

12. Arrangement according to any one of claims 9 to 11, **characterised in that** the means (5) for regulating the air flow progressively reduce the air flow taken in through each device (2a, 2b, 2c), between the downstream device (2c) and the upstream device (2a), so that the air flow taken in through each device (2a, 2b, 2c) is generally constant.
